# FASCICULE DE BREVET EUROPEEN

(11) **EP 2 175 282 B1**
(45) Date de publication et mention de la délivrance du brevet: **25.05.2011**
(21) Numéro de dépôt: 09172519.2
(22) Date de dépôt: 08.10.2009
(51) Int. Cl.: G01P 15/097, G01P 15/10

(54) **Accéléromètre micro-usiné.**
Mikromechanischer Beschleunigungssensor
Micromechanical accelerometer

(30) Priorité: 10.10.2008 FR 0805615
(43) Date de publication de la demande: 14.04.2010
(73) Titulaire: Thales, 92200 Neuilly Sur Seine (FR)
(72) Inventeur: Quer, Régis, 07130, SAINT PERAY (FR); Lefort, Olivier, 26000, VALENCE (FR); Boura, André, 86100, CHATELLERAULT (FR)
(74) Mandataire: Esselin, Sophie

(56) Documents cités:
- EP-A- 0 684 479
- FR-A- 2 848 298
- US-A- 2 984 111
- US-A- 4 750 363

## Description

L'invention porte sur un accéléromètre micro-usiné dans une plaque plane comprenant une base, et au moins deux cellules de mesure à résonateur munies d'un élément sismique mobile commun susceptible de se déplacer en translation et/ou en rotation.

Un accéléromètre monolithique plat comporte classiquement un corps ayant une base et deux cellules de mesure en vue d'une mesure différentielle. La structure plate permet une fabrication simple et économique notamment par des procédés d'attaque chimique. De plus, la fabrication peut être collective. Une cellule de mesure comprend typiquement une masse sismique reliée d'une part à la base et d'autre part à un capteur de force lui-même également relié à la base. Lorsque l'accéléromètre est soumis à une accélération suivant l'axe sensible qui est l'axe de l'accélération à mesurer, la masse sismique est soumise à une force d'inertie qui est amplifiée et transmise au capteur de force par des moyens permettant d'amplifier la force ou le déplacement transmis.

De manière connue, l'amplification est obtenue au moyen d'un bras dit bras de levier qui prolonge la masse sismique. Le déplacement de la masse sismique est transmis au capteur de force au moyen de ce bras de levier. Plus précisément, le bras est relié à la base par une articulation permettant à la masse de tourner autour d'un axe perpendiculaire à l'axe sensible de l'accéléromètre et est relié au capteur de force par une charnière. Lorsque l'accéléromètre est soumis à une accélération suivant l'axe sensible, la masse sismique est soumise à une force qui la fait tourner autour de l'articulation, ainsi donc que la partie du bras de levier reliée au capteur de force.

Le capteur de force est à poutre(s) vibrante(s). La poutre vibrante est reliée à des électrodes permettant de la faire vibrer à sa fréquence de résonance et à un circuit de mesure de la variation de sa fréquence de résonance.

Les cellules de mesure sont montées de manière à ce que lorsque l'accéléromètre est soumis à une accélération suivant l'axe sensible, l'une des poutres subit une force de traction, l'autre poutre subissant une force de compression de même valeur, ces traction ou compression faisant varier la fréquence de résonance de la poutre mesurée par le circuit de mesure: On obtient ainsi une mesure différentielle permettant notamment de s'affranchir de certains effets non linéaires.

La variation de la fréquence de résonance est directement liée au déplacement du capteur de force induit par la rotation de la partie du bras de levier reliée au capteur de force. L'extrémité de la poutre subit aussi une certaine rotation ce qui s'avère souvent gênant, notamment dans le cas d'un diapason (c'est-à-dire de deux poutres formant un diapason) où la force transmise aux deux poutres n'est pas exactement identique.

De plus, la qualité d'usinage des charnières et articulations est primordiale et constitue une des limitations industrielles de cet accéléromètre.

En outre le déplacement étant proportionnel à la longueur du bras de levier, l'encombrement est d'autant plus important que l'on souhaite obtenir un grand rapport d'amplification.

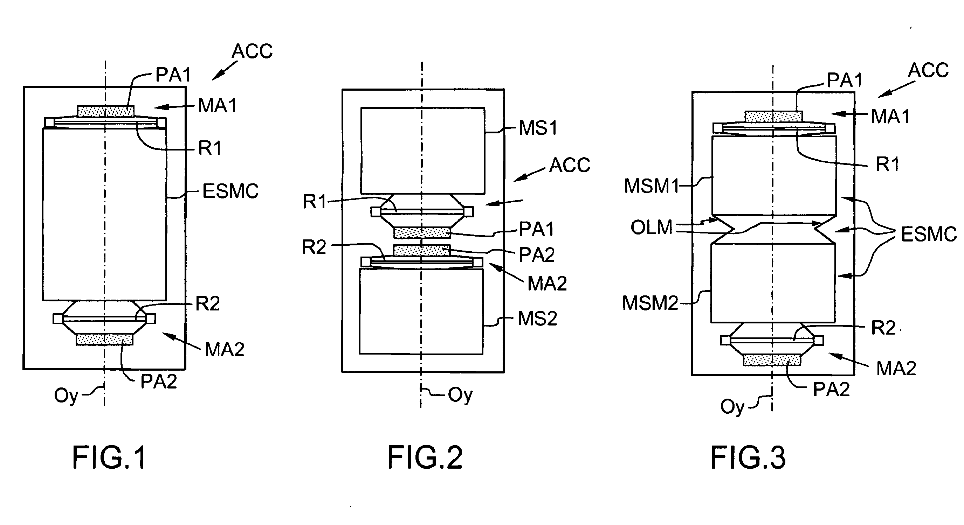

La demande de brevet français FR 2 848 298 (THALES) propose un accéléromètre, tel que schématisé de manière simplifiée par la présente figure 1, dont les moyens d'amplification MA1, MA2 ne comportent pas de bras de levier utilisé en rotation et comportent de manière générale un résonateur respectif R1, R2 qui peut être une poutre vibrante. Ce document décrit un accéléromètre ACC micro-usiné dans une plaque plane comprenant une base, et au moins une cellule de mesure comprenant un ensemble sismique mobile ESMC comportant une masse sismique mobile reliée à la base et susceptible de se déplacer en translation suivant l'axe Oy sensible de l'accéléromètre sous l'effet d'une accélération γ suivant cet axe Oy. Une cellule à résonateur comporte un résonateur susceptible de vibrer et de subir une traction ou une compression en fonction du sens de l'accélération γ et placé symétriquement par rapport à un axe de symétrie S de la structure, cet axe S étant parallèle à l'axe Oy et passant par le centre de gravité de la masse sismique. Une cellule de mesure comprend, en outre, des moyens d'amplification MA1, MA2, de la force d'accélération générant la translation comprenant au moins un pied d'ancrage PA1, PA2 à la base, deux terminaisons rigides de la cellule à résonateur et deux paires de bras micro-usinés, les paires étant symétriques par rapport à l'axe S, chaque paire comportant un premier bras reliant un premier point d'attache sur une terminaison et un deuxième point d'attache sur la masse sismique, et un deuxième bras reliant un troisième point d'attache à la même terminaison et un quatrième point d'attache au pied d'ancrage, l'angle α entre l'axe Ox perpendiculaire à l'axe Oy. La ligne joignant les premier et deuxième points d'attache est symétrique par rapport à l'axe reliant les terminaisons par leur milieu, de l'angle entre l'axe Ox et la ligne joignant les troisième et quatrième points d'attache et suffisamment faible pour que la force exercée en traction ou en compression sur le résonateur soit supérieure à la force d'accélération exercée sur la masse sismique.

En raison de la symétrie de cette structure, les déplacements de la masse sismique, des terminaisons d'encastrement et du résonateur sont parfaitement axiaux. De plus les performances de cette structure, c'est-à-dire le rapport d'amplification obtenu est simplement déterminé par l'angle α ; la géométrie de la masse sismique dont le centre de gravité est situé sur l'axe de symétrie S, n'intervient pas sur les performances de l'accéléromètre.

Les moyens d'amplification décrits peuvent être en forme dite de "cric" et/ou de "papillon". La figure 1 illustre un exemple de réalisation avec des moyens d'amplification en forme de "cric".

Une telle solution comprenant une masse sismique unique mobile est relativement sensible aux dilatations thermiques des matériaux externes aux cellules de mesure. Ainsi, la qualité des mesures de l'accéléromètre peuvent être fortement dégradées avec l'augmentation de telles déformations thermiques. En outre, lorsque la température de la structure n'est pas homogène, des contraintes parasites dégradant les mesures peuvent apparaître.

Il est également connu des systèmes comprenant deux masses sismiques indépendantes MS1 et MS2, reliée chacune à la base de l'accéléromètre, comme schématisé sur la figure 2. De tels systèmes bi-masses sont très sensibles aux dispersions de fabrications, notamment en ce qui concerne la réponse différentielle des deux cellules de mesure en présence de vibrations, le mode de vibration d'une masse dit mode masse-ressort et la surtension du premier détecteur peuvent être différents de ceux de l'autre masse, ce qui nuit considérablement au gain différentiel en présence de vibrations à proximité de ces modes.

De tels systèmes sont sensibles aux dispersions de fabrication, et aux dilatations thermiques subies par l'accéléromètre et notamment les points d'attache.

Un but de l'invention est de pallier aux divers problèmes précédemment cités, et notamment de limiter les perturbations engendrées par les dilatations thermiques subies par l'accéléromètre sur les mesures de l'accéléromètre.

Il est proposé, selon un aspect de l'invention, un accéléromètre micro-usiné dans une plaque plane comprenant une base, et au moins deux cellules de mesure à résonateur munies d'un élément sismique mobile commun. Les deux cellules de mesure sont placées de part et d'autre de l'élément sismique mobile commun selon l'axe sensible de l'accéléromètre, de sorte que sous l'effet d'une accélération, le résonateur d'une cellule de mesure subit une traction tandis le résonateur de l'autre cellule de mesure subit une compression. Lesdites cellules de mesure comprennent respectivement des moyens d'amplification de la force d'accélération générant la translation de l'élément sismique mobile commun munis d'un pied d'ancrage respectif. En outre, ledit élément sismique mobile commun comprend au moins deux masses sismiques mobiles susceptibles de se déplacer en translation selon ledit axe sensible et/ou en rotation par rapport à un axe de rotation respectif sensiblement orthogonal audit axe sensible sous l'effet d'une accélération selon ledit axe sensible, lesdites deux masses sismiques mobiles étant reliées entre-elles par un organe de liaison mécanique apte à éviter, au moins en partie, des déformations des moyens d'amplification suite à des déformations de l'accéléromètre engendrées par des contraintes thermiques externes.

On a ainsi, sans surcoût, un élément sismique bi-masse couplées, capable de limiter sensiblement l'impact sur les mesures de déformations de l'accéléromètre engendrées par des contraintes thermiques externes.

En outre, à basses fréquences, typiquement des fréquences inférieures à 1 kHz, les masses sont couplées de manière à fonctionner comme une masse sismique unique.

Une telle réalisation est aisée à mettre en oeuvre, peu encombrante, et sans impact sur le processus de réalisation.

Dans un mode de réalisation, la raideur mécanique de l'organe de liaison mécanique est inférieure à la raideur mécanique de l'ensemble formé par lesdits moyens d'amplification et lesdits résonateurs.

On obtient ainsi une réduction importante de l'effet des dilatations externes ou des gradients thermiques.

Selon un mode de réalisation, ledit organe de liaison mécanique comprend au moins une poutre travaillant en traction/compression, en considérant l'axe sensible.

Un tel mode de réalisation est de conception simple et peu coûteuse.

Dans un mode de réalisation, ledit organe de liaison mécanique comprend au moins une poutre travaillant en flexion, en considérant l'axe sensible.

Un tel mode de réalisation est de compacité élevée.

Par exemple, ledit organe de liaison mécanique comprend au moins un bras replié.

Une telle mise en oeuvre est aisée et de coût réduit.

Selon un mode de réalisation, l'élément sismique mobile commun comprend deux masses sismiques sensiblement identiques.

La réalisation de deux masses identiques permet de réduire les coûts de fabrication.

Selon un autre aspect de l'invention, il est également proposé un procédé de découplage thermo-mécanique d'un élément sismique mobile commun à deux cellules de mesure à résonateur d'un accéléromètre micro-usiné dans une plaque plane comprenant une base, lesdites cellules de mesure comprenant respectivement des moyens d'amplification de la force d'accélération générant la translation de l'élément sismique. On relie mécaniquement deux masses sismiques mobiles de l'élément sismique mobile, de manière à éviter, au moins en partie, des déformations des moyens d'amplification suite à des déformations de l'accéléromètre engendrées par des contraintes thermiques externes.

Dans un mode de mise en oeuvre, la raideur mécanique de l'organe de liaison mécanique est inférieure à la raideur mécanique de l'ensemble formé par lesdits moyens d'amplification et lesdits résonateurs.

L'invention sera mieux comprise à l'étude de quelques modes de réalisation décrits à titre d'exemples nullement limitatifs et illustrés par les dessins annexés sur lesquels :
- les figures 1 et 2 sont des schémas synoptiques d'un accéléromètre selon l'état de la technique existant ;
- la figure 3 est un schéma synoptique d'un accéléromètre, selon un aspect de l'invention ; et
- les figures 4, 5 et 6 illustrent divers exemples de réalisation d'un accéléromètre selon un aspect de l'invention.

Sur les différentes figures, les éléments ayant des références identiques sont identiques.

Dans la suite de la description, un résonateur comprend deux poutres formant diapason, vibrant en opposition de phase au moyen de deux électrodes. Cette configuration en diapason est représentée sur les figures. En variante, il est tout aussi possible d'utiliser des résonateurs comprenant une poutre vibrante, plusieurs poutres vibrantes, ou une barre de torsion.

Tel qu'illustré sur la figure 3, un accéléromètre ACC micro-usiné dans une plaque plane comprenant une base, comprend deux cellules de mesure à résonateur R1, R2 munies d'un élément sismique mobile commun ESMC susceptible de se déplacer en translation selon un axe sensible Oy de l'accéléromètre ACC sous l'effet d'une accélération selon cet axe Oy. Les deux cellules de mesure à résonateur sont placées de part et d'autre de l'élément sismique mobile, commun ESMC selon l'axe Oy, de sorte que sous l'effet d'une accélération, le résonateur R1, R2 d'une cellule de mesure subit une traction tandis le résonateur de l'autre cellule de mesure subit une compression. Les cellules de mesure comprennent respectivement des moyens d'amplification MA1, MA2 de la force d'accélération générant la translation de l'élément sismique, munis d'un pied d'ancrage PA1, PA2.

L'élément sismique mobile commun ESMC comprend deux masses sismiques mobiles MSM1, MSM2 reliées entre-elles par un organe de liaison mécanique OLM apte à éviter, au moins en partie, des déformations statiques des moyens d'amplification MA1, MA2 suite à des déformations de l'accéléromètre ACC engendrées par des contraintes thermiques externes.

En effet, sous l'influence de déformations thermiques externes, l'organe de liaison mécanique souple OLM se déforme de manière à absorber ces déformations thermiques. A basses fréquences, typiquement inférieures à 1 KHz, cette liaison mécanique permet à l'élément sismique mobile commun ESMC de ne pas subir de contraintes dues à ces déformations thermiques, tout en gardant le fonctionnement mécanique d'une unique masse sismique.

Bien entendu, en variante, il peut être envisagé d'utiliser plus de deux masses sismiques mobiles reliées en chaîne par des organes de liaison mécanique. Pour des raisons d'optimisation tenant compte du coût et de la complexité de réalisation, l'utilisation de deux masses sismiques mobiles reliées par un organe de liaison mécanique apparaît comme particulièrement intéressante.

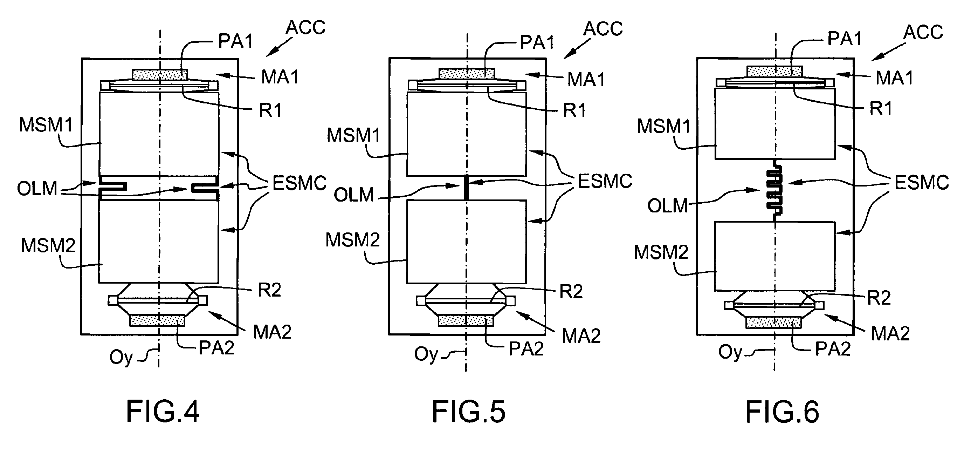

Les figures 4, 5 et 6 illustrent différents modes de réalisation de l'organe de liaison mécanique selon un aspect de l'invention.

Les figures 4 et 6 illustrent des organes de liaison mécanique de type poutres travaillant en flexion, considérant le mouvement selon l'axe Oy.

La figure 5 illustre un organe de liaison mécanique travaillant en traction/compression, considérant le mouvement selon l'axe Oy.

Bien entendu, l'invention s'applique également à des accéléromètres pour lesquels chacune des masses sismiques mobiles MSM1, MSM2, peut être, en outre, directement reliés à une zone d'ancrage respective de la base, par des charnières respectives, les masses sismiques mobiles pouvant alors également subir une rotation autour de ces charnières.

Un tel accéléromètre permet, sans surcoût, au moyen d'un élément sismique bi-masse couplées, de limiter sensiblement l'impact sur les mesures de déformations de l'accéléromètre engendrées par des contraintes thermiques externes. En outre, à basses fréquences, typiquement des fréquences inférieures à 1 kHz, les masses sismiques sont couplées de manière à fonctionner comme une mono-masse sismique. Une telle réalisation est aisée à mettre en oeuvre, peu encombrante, et sans impact sur le processus de réalisation.

## Revendications

1. Accéléromètre (ACC) micro-usiné dans une plaque plane comprenant une base, et au moins deux cellules de mesure à résonateur (R1, R2) munies d'un élément sismique mobile commun (ESMC), les deux cellules de mesure étant placées de part et d'autre de l'élément sismique mobile commun (ESMC) selon l'axe sensible (Oy) de l'accéléromètre, de sorte que sous l'effet d'une accélération, le résonateur d'une cellule de mesure subit une traction tandis le résonateur de l'autre cellule de mesure subit une compression, lesdites cellules de mesure comprenant respectivement des moyens d'amplification (MA1, MA2) de la force d'accélération générant la translation de l'élément sismique mobile commun (ESMC) munis d'un pied d'ancrage respectif (PA1, PA2), **caractérisé en ce que** ledit élément sismique mobile commun (ESMC) comprend au moins deux masses sismiques mobiles (MSM1, MSM2) susceptibles de se déplacer en translation selon ledit axe sensible (Oy) et/ou en rotation par rapport à un axe de rotation respectif sensiblement orthogonal audit axe sensible sous l'effet d'une accélération selon ledit axe sensible (Oy), reliées entre-elles par un organe de liaison mécanique (OLM) apte à éviter, au moins en partie, des déformations des moyens d'amplification (MA1, MA2) suite à des déformations de l'accéléromètre (ACC) engendrées par des contraintes thermiques externes, la raideur mécanique de l'organe de liaison mécanique (OLM) étant inférieure à la raideur mécanique de l'ensemble formé par lesdits moyens d'amplification (MA1, MA2) et lesdits résonateurs (R1, R2).

2. Accéléromètre selon la revendication 1, dans lequel ledit organe de liaison mécanique (OLM) comprend au moins une poutre travaillant en traction/compression, en considérant l'axe sensible (Oy).

3. Accéléromètre selon la revendication 1, dans lequel ledit organe de liaison mécanique (OLM) comprend au moins une poutre travaillant en flexion, en considérant l'axe sensible (Oy).

4. Accéléromètre selon la revendication 3, dans lequel ledit organe de liaison mécanique (OLM) comprend au moins un bras replié.

5. Accéléromètre selon l'une des revendications précédentes, dans lequel l'élément sismique mobile commun (ESMC) comprend deux masses sismiques (MSM1, MSM2) sensiblement identiques.

6. Procédé de découplage thermo-mécanique d'un élément sismique mobile commun (ESMC) à deux cellules de mesure à résonateur (R1, R2) d'un accéléromètre (ACC) micro-usiné dans une plaque plane comprenant une base, lesdites cellules de mesure comprenant respectivement des moyens d'amplification (MA1, MA2) de la force d'accélération générant la translation de l'élément sismique mobile commun (ESMC), **caractérisé en ce que** l'on relie mécaniquement deux masses sismiques mobiles (MSM1, MSM2) de l'élément sismique mobile commun (ESMC), de manière à éviter, au moins en partie, des déformations des moyens d'amplification (MA1, MA2) suite à des déformations de l'accéléromètre (ACC) engendrées par des contraintes thermiques externes,
la raideur mécanique de l'organe de liaison mécanique (OLM) étant inférieure à la raideur mécanique de l'ensemble formé par lesdits moyens d'amplification (MA1, MA2) et lesdits résonateurs (R1, R2).

## Claims

1. An accelerometer (ACC) micro-machined in a flat plate comprising a base and at least two resonator measuring cells (R1, R2) provided with a common movable seismic element (ESMC), the two measuring cells being placed either side of the common movable seismic element (ESMC) along the sensitive axis (Oy) of the accelerometer so that under the effect of an acceleration the resonator of a measuring cell is subject to traction, whereas the resonator of the other measuring cell is subject to compression, said measuring cells respectively comprising means of amplifying (MA1, MA2) the acceleration force generating the translation of the common movable seismic element (ESMC) provided with a respective anchoring foot (PA1, PA2), **characterised in that** said common seismic movable element (ESMC) comprises at least two movable seismic masses (MSM1, MSM2) susceptible to displacement by translation along said sensitive axis (Oy) and/or by rotation relative to a respective axis of rotation substantially orthogonal to said sensitive axis under the effect of an acceleration along said sensitive axis (Oy), which movable seismic masses (MSM1, MSM2) are interconnected by a mechanical connecting component (OLM) designed to prevent, at least in part, deformations in the amplifying means (MA1, MA2) following deformations in the accelerometer (ACC) caused by external thermal stresses, the mechanical stiffness of the mechanical connection component (OLM) being less than the mechanical stiffness of the assembly formed by said amplifying means (MA1, MA2) and said resonators (R1, R2).

2. The accelerometer according to claim 1, wherein said mechanical connection component (OLM) comprises at least one beam functioning by traction/compression, in relation to the sensitive axis (Oy).

3. The accelerometer according to claim 1, wherein said mechanical connection component (OLM) comprises at least one beam functioning by bending, in relation to the sensitive axis (Oy).

4. The accelerometer according to claim 3, wherein said mechanical connection component (OLM) comprises at least one folded arm.

5. The accelerometer according to any one of the previous claims, wherein the common movable seismic element (ESMC) comprises two essentially identical seismic masses (MSM1, MSM2).

6. A process for thermomechanical decoupling of a common movable seismic element (ESMC) with two resonator measuring cells (R1, R2) from an accelerometer (ACC) micro-machined in a flat plate comprising a base, said measuring cells respectively comprising means of amplifying (MA1, MA2) the acceleration force generating the translation of the common movable seismic element (ESMC), **characterised in that** two movable seismic masses (MSM1, MSM2) of the common movable seismic element (ESMC) are mechanically connected so as to prevent, at least in part, deformations of the amplifying means (MA1, MA2) following deformations of the accelerometer (ACC) caused by external thermal stresses, the mechanical stiffness of the mechanical connection component (OLM) being less than the mechanical stiffness of the assembly formed by said amplifying means (MA1, MA2) and said resonators (R1, R2).

## Patentansprüche

1. Beschleunigungsmesser (ACC), der in eine ebene Platte mikrogearbeitet ist, die eine Basis umfasst, und wenigstens zwei Resonatormesszellen (R1, R2), die mit einem gemeinsamen beweglichen seismischen Element (ESMC) versehen sind, wobei die beiden Messzellen auf beiden Seiten des gemeinsamen beweglichen seismischen Elements (ESMC) entlang der empfindlichen Achse (Oy) des Beschleunigungsmessers platziert sind, so dass der Resonator einer Messzelle unter dem Einfluss einer Beschleunigung eine Traktion erfährt, während der Resonator der anderen Messzelle eine Kompression erfährt, wobei die Messzellen jeweils Mittel zum Verstärken (MA1, MA2) der Beschleunigungskraft umfassen, die die Translation des gemeinsamen beweglichen seismischen Elements (ESMC) erzeugt, das mit einem jeweiligen Verankerungsfuß (PA1, PA2) versehen ist, **dadurch gekennzeichnet, dass** das gemeinsame bewegliche seismische Element (ESMC) wenigstens zwei bewegliche seismische Massen (MSM1, MSM2) umfasst, die sich translational entlang der empfindlichen Achse (Oy) und/oder rotational in Bezug auf eine jeweilige Rotationsachse im Wesentlichen orthogonal zu der empfindlichen Achse unter dem Einfluss einer Beschleunigung entlang der empfindlichen Achse (Oy) bewegen können, wobei die beweglichen seismischen Massen (MSM1, MSM2) durch eine mechanische Verbindungskomponente (OLM) miteinander verbunden sind, die so ausgelegt ist, dass sie wenigstens teilweise Verformungen der Verstärkungsmittel (MA1, MA2) nach Verformungen des Beschleunigungsmessers (ACC) verhütet, die durch externe thermische Beanspruchungen verursacht werden, wobei die mechanische Steifigkeit der mechanischen Verbindungskomponente (OLM) geringer ist als die mechanische Steifigkeit der Baugruppe, die von den Verstärkungsmitteln (MA1, MA2) und den Resonatoren (R1, R2) gebildet wird.

2. Beschleunigungsmesser nach Anspruch 1, wobei die mechanische Verbindungskomponente (OLM) wenigstens einen Träger umfasst, der durch Traktion/Kompression in Bezug auf die empfindliche Achse (Oy) wirkt.

3. Beschleunigungsmesser nach Anspruch 1, wobei die mechanische Verbindungskomponente (OLM) wenigstens einen Träger umfasst, der durch Biegen in Bezug auf die empfindliche Achse (Oy) wirkt.

4. Beschleunigungsmesser nach Anspruch 3, wobei die mechanische Verbindungskomponente (OLM) wenigtens einen gefalteten Arm umfasst.

5. Beschleunigungsmesser nach einem der vorherigen Ansprüche, wobei das gemeinsame bewegliche seismische Element (ESMC) zwei im Wesentlichen identische seismische Massen (MSM1, MSM2) umfasst.

6. Verfahren zum thermomechanischen Abkoppeln eines gemeinsamen beweglichen seismischen Elements (ESMC) mit zwei Resonatormesszellen (R1, R2) von einem Beschleunigungsmesser (ACC), der in eine ebene Platte mikrogearbeitet ist, die eine Basis umfasst, wobei die Messzellen jeweils Mittel (MA1, MA2) zum Verstärken der Beschleunigungskraft umfassen, die die Translation des gemeinsamen beweglichen seismischen Elements (ESMC) erzeugt, **dadurch gekennzeichnet, dass** zwei bewegliche seismische Massen (MSM1, MSM2) des gemeinsamen beweglichen seismischen Elements (ESMC) mechanisch miteinander verbunden sind, um wenigstens teilweise Verformungen der Verstärkungsmittel (MA1, MA2) nach Verformungen des Beschleunigungsmessers (ACC) zu verhüten, die durch externe thermische Beanspruchungen verursacht werden, wobei die mechanische Steifigkeit der mechanischen Verbindungskomponente (OLM) geringer ist als die mechanische Steifigkeit der Baugruppe, die von den Verstärkungsmitteln (MA1, MA2) und den Resonatoren (R1, R2) gebildet wird.
